# EUROPÄISCHE PATENTANMELDUNG

(11) **EP 1 238 895 A2**
(43) Veröffentlichungstag der Anmeldung: **11.09.2002**
(21) Anmeldenummer: 02004052.3
(22) Anmeldetag: 23.02.2002
(51) Int. Cl.: B62D 25/20

(54) **Kraftfahrzeug mit seitlichen Schwellern**

(30) Priorität: 08.03.2001 DE 1011095
(71) Anmelder: Bayerische Motoren Werke Aktiengesellschaft, 80809 München (DE)
(72) Erfinder: Rill, Roland, 80807 München (DE)

(57) **Zusammenfassung**

Die Karosserie eines Personenkraftwagens hat zwei seitliche Schweller (1), die aus einem Blechinnenteil (2) und einem Blechaußenteil (3) bestehen. Dabei ist am oben liegenden Randbereich des Schwellers (1) ein in den Fahrzeuginnenraum (a) abstehendes Versteifungsteil (6) vorgesehen, das mit seinem oben liegenden Befestigungsflansch (6") am Türeinstiegflansch (4), mit seinem unten liegenden Befestigungsflansch (6") dagegen am lotrechten Wandungsabschnitt (2') befestigt ist. Dabei erstreckt sich das U-förmige Versteifungsteil (6) durchlaufend von der vorderen bis zur hinteren Karosseriesäule.

## Beschreibung

Die Erfindung bezieht sich auf ein Kraftfahrzeug mit seitlichen Schwellern der im Oberbegriff des Patentanspruchs 1 genannten und durch offenkundige Vorbenutzung bekannt gewordenen Art.

Bei dem aus der Praxis bekannten Personenkraftwagen (Skoda Octavia) weist das Blechinnenteil des Schwellers an einem etwa lotrechten Wandungsabschnitt ein nach innen ragendes, U-förmiges Befestigungsteil auf, das sich in Fahrzeuglängsrichtung erstreckt. Da das Befestigungsteil jedoch nur aus einigen einzelnen Längsabschnitten besteht, zwischen denen jeweils eine Abstandslücke vorhanden ist, wird der Schweller durch das Befestigungsteil festigkeitsmäßig kaum verbessert.

Ferner geht aus US 4,615,558 ein Personenkraftwagen mit seitlichen Schwellern hervor, die jeweils aus einem U-förmigen Blechinnenteil und aus einem mehrere Abstufungen aufweisenden Blechaußenteil bestehen. Dabei ist das Blechinnenteil und das Blechaußenteil unter Zwischenlage eines etwa lotrecht verlaufenden, sich im Hohlraum des Schwellers befindenden Verstärkungsblechs an ihren nach außen abstehenden Verbindungsflanschen miteinander verschweißt. Da sich das Blechinnenteil über die ganze Höhe des Schwellers erstreckt, beansprucht dieser innenseitig einen großen Einbauraum. Darüberhinaus hat auch der Schweller ein verhältnismäßig hohes Gewicht. Schließlich ist an dem bekannten Schweller kein spezielles, die Beulsteifigkeit erhöhendes Versteifungsteil vorhanden.

Aufgabe der Erfindung ist es daher, einen Schweller der im Oberbegriff des Patentanspruchs 1 genannten Art derart auszubilden, dass die Beulsteifigkeit des Schwellers verbessert, aber dessen Gewicht dennoch nur unwesentlich erhöht wird.

Zur Lösung der Aufgabe sind die im Patentanspruch 1 dargelegten Merkmale vorgesehen.

Durch das am Schweller fahrzeuginnenseitig angebrachte Versteifungsteil, das erfindungsgemäß an seinem oben liegenden Schenkel mit dem Türeinstiegflansch durch Punktschweißen, Kleben oder dergleichen verbunden ist, wird vorteilhafterweise die Beulsteifigkeit des Schwellers erheblich erhöht, wobei diese noch dadurch gesteigert wird, wenn das Versteifungsteil als ein einstückiges Teil ausgebildet ist, das sich durchlaufend von der A-Säule zur C-Säule der Fahrzeugkarosserie erstreckt. Dabei kann das Versteifungsteil als ein Ziehteil in einfacher Weise hergestellt und mit vergleichsweise geringem Arbeitsaufwand an der Fahrzeugkarosserie angebracht werden (Merkmale der Patentansprüche 1 und 2).

Dadurch, dass sich das Versteifungsteil höhenmäßig allenfalls über die obere Hälfte des Höhenverlaufs des Schwellers erstreckt, zweckmäßigerweise jedoch nur etwa ein Drittel bis etwa ein Fünftel der größten Höhenerstreckung des Schwellers aufweist, wird dessen Gewicht kaum, die Beulsteifigkeit jedoch ganz erheblich erhöht. Dabei wird durch ein derart gestaltetes und erfindungsgemäß angeordnetes Versteifungsteil auch wenig Einbauraum beansprucht (Merkmale der Patentansprüche 3 und 4).

Für eine optimale Befestigung des U-förmigen Versteifungsteils sind an dessen beiden Schenkeln jeweils nach außen verlaufende Befestigungsflansche ausgebildet, über die das Versteifungsteil mit dem Türeinstiegflansch bzw. mit dem lotrechten Wandungsabschnitt des Blechinnenteils unter Bildung eines breiten Randflansches durch Punktschweißen, Kleben oder dergleichen verbunden ist (Merkmale der Patentansprüche 5 und 6).

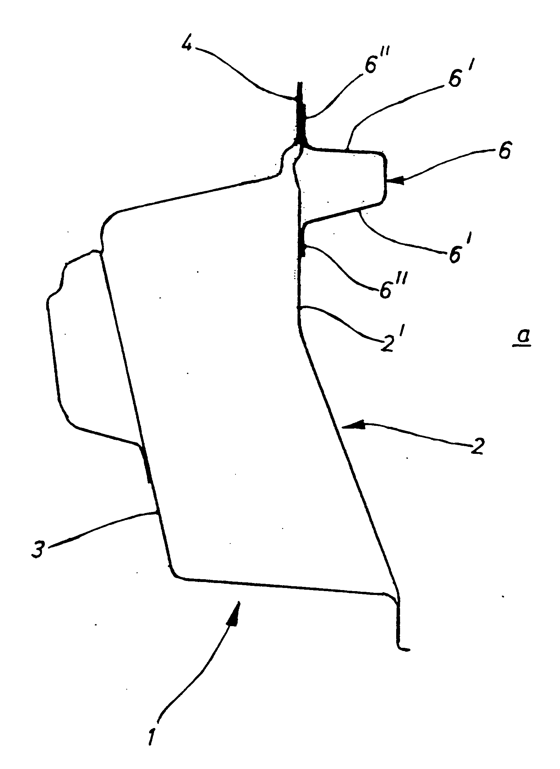

Ein Ausführungsbeispiel der Erfindung ist in der Zeichnung dargestellt und wird im Folgenden erläutert. Diese zeigt einen Vertikalschnitt eines Schwellers eines Personenkraftwagens.

Die Karosserie eines nicht dargestellten Personenkraftwagens hat zwei seitliche Schweller 1, von denen der in der Zeichnung dargestellte Schweller 1 in Fahrtrichtung links (fahrerseitig) liegt. Dabei besteht der Schweller 1 jeweils aus einem Blechinnenteil 2 mit einem etwa lotrecht verlaufenden Wandungsabschnitt 2' und einem mit diesem und mit dem Blechinnenteil 2 verbundenen, nach außen abstehenden Blechaußenteil 3. An diesem ist im Bereich der Fahrzeugtüren jeweils ein lotrecht nach oben abstehender Randflansch ausgebildet, der mit dem freien Randbereich des lotrechten Wandungsabschnitts 2' durch Punktschweißen oder Kleben zu einem Türeinstiegflansch 4 verbunden ist.

Wie in der Zeichnung ersichtlich, ist am oberen Randbereich des lotrechten Wandungsabschnitts 2' ein im Querschnitt U-förmiges Versteifungsteil 6 angebracht, das in den Fahrzeuginnenraum a ragt. Dabei beträgt die Höhenerstreckung des Versteifungsteils 6 an seinem Befestigungsbereich etwa ein Fünftel der größten Höhenerstreckung des Schwellers 1. An den beiden Schenkeln 6' des Versteifungsteils 6 ist jeweils ein durch Abwinkelung erzeugter Befestigungsflansch 6" ausgebildet, die voneinander abgewandt sind. Dabei ist der oben liegende Befestigungsflansch 6" mit dem Türeinstiegflansch 4 durch Punktschweißen und/oder Kleben zu einem einstückigen Teil verbunden. Ferner ist der unten liegende Befestigungsflansch 6" mit dem lotrechten Wandungsabschnitt 2' auch durch Punktschweißen und/oder Kleben verbunden. Das Versteifungsteil 6 verläuft dabei durchlaufend, also als ein einstückiges Teil von der vorderen (A-Säule) bis zur hinteren (C-Säule) Karosseriesäule und bildet damit für den Schweller 1 eine optimale Versteifung.

## Patentansprüche

1. Kraftfahrzeug mit seitlichen Schwellern, jeweils im Wesentlichen bestehend aus einem Blechinnenteil und einem mit diesem verbundenen, nach außen abstehenden Blechaußenteil, wobei das Blechinnenteil einen schräg oder lotrecht verlaufenden Wandungsabschnitt aufweist, an dem wenigstens ein nach innen ragendes, im Querschnitt etwa U-förmiges sowie sich in Fahrzeuglängsrichtung erstreckendes Befestigungsteil angebracht ist, **dadurch gekennzeichnet, dass** das Befestigungsteil als ein Versteifungsteil (6) dient, das über einen oben liegenden Schenkel (Befestigungsflansch 6") mit einem Türeinstiegflansch (4) verbunden ist.

2. Kraftfahrzeug nach Anspruch 1, **dadurch gekennzeichnet, dass** sich das Versteifungsteil (6) durchlaufend von einer vorderen bis zu einer hinteren Karosseriesäule erstreckt.

3. Kraftfahrzeug nach Anspruch 1 oder 2, **dadurch gekennzeichnet, dass** sich das Versteifungsteil (6) höhenmäßig allenfalls über die obere Hälfte des Höhenverlaufs des Schwellers (1) erstreckt.

4. Kraftfahrzeug nach einem der Ansprüche 1 bis 3, **dadurch gekennzeichnet, dass** die Höhenerstreckung des Versteifungsteils (6) etwa ein Drittel bis etwa ein Fünftel der größten Höhenerstreckung des Schwellers (1) beträgt.

5. Kraftfahrzeug nach einem der Ansprüche 1 bis 4, **dadurch gekennzeichnet, dass** an den beiden Schenkeln (6') des U-förmigen Versteifungsteils (6) jeweils voneinander abgewandte Befestigungsflansche (6") ausgebildet sind.

6. Kraftfahrzeug nach einem der Ansprüche 1 bis 5, **dadurch gekennzeichnet, dass** der oben liegende Befestigungsflansch (6") des U-förmigen Versteifungsteils (6) mit dem Türeinstiegflansch (4), der unten liegende Befestigungsflansch (6") dagegen mit einem etwa lotrecht verlaufenden Wandungsabschnitt (2') des Blechinnenteils (2) durch Schweißen, Kleben oder dergleichen verbunden ist.
